# EUROPÄISCHE PATENTSCHRIFT

(11) **EP 3 527 324 B1**
(45) Veröffentlichungstag und Bekanntmachung des Hinweises auf die Patenterteilung: **25.01.2023**
(21) Anmeldenummer: 19169330.8
(22) Anmeldetag: 19.06.2018
(51) Int. Cl.: B23Q 1/00

(54) **NULLPUNKTSPANNMODUL MIT EINEM ABDECKELEMENT**
NEUTRAL POINT TENSIONING MODULE WITH A COVERING ELEMENT
MODULE DE SERRAGE À POINT ZÉRO AVEC UN ELEMENT DE FERMETURE

(30) Priorität: 26.06.2017 DE 102017114150
(43) Veröffentlichungstag der Anmeldung: 21.08.2019
(62) Teilanmeldung aus: 18178456.2
(73) Patentinhaber: Schunk GmbH & Co. KG Spann- und Greiftechnik, 74348 Lauffen am Neckar (DE)
(72) Erfinder: Wäscher, Tobias, 88374 Hoßkirch (DE); Schräder, Philipp, 88512 Mengen-Blochingen (DE); Buth, Alexander, 88518 Hundersingen (DE)
(74) Vertreter: DREISS Patentanwälte PartG mbB

(56) Entgegenhaltungen:
- EP-A1- 3 171 041
- EP-B1- 1 707 307
- DE-U1-202004 009 051

## Beschreibung

Die Erfindung betrifft ein Nullpunktspannmodul mit einem Grundgehäuse, mit einer im Grundgehäuse vorgesehenen Spannaufnahme zur Aufnahme eines Spannelements, wie beispielsweise eines Spannbolzens oder eines Spannrings, mit einem im Grundgehäuse axial verlagerbaren Kolben, und mit wenigstens einem im Grundgehäuse senkrecht zu einer Mittellängsachse der Spannaufnahme bewegbaren Verriegelungselement, beispielsweise in Form eines Spannschiebers, wobei wenigstens ein am Kolben bzw. am Verriegelungselement quer zur Mittellängsachse angeordneter Zylinderstift vorgesehen ist, der mit einer verriegelungselementseitigen bzw. kolbenseitigen Schrägführung derart bewegungsgekoppelt ist, dass beim Verlagern des Kolbens in axialer Richtung der das Verriegelungselement zum Festsetzen oder Freigeben eines von der Spannaufnahme aufgenommenen Spannelements in radialer Richtung bewegt wird. Die Erfindung betrifft auch eine Verschlusseinrichtung zur Anordnung in der Spannaufnahme eines Nullpunktspannmoduls.

Ein Nullpunktspannmodul bei dem das Verriegelungselement als Spannschieber ausgebildet ist, mit einem am Kolben vorgesehenen Zylinderstift und einer verriegelungselementseitigen Schrägführung ist beispielsweise aus der EP 1 707 307 B1 bekannt, die die Basis für den Oberbegriff des Anspruchs 1 bildet. Die DE 10 2010 013 911 A1 offenbart ein Spannmodul, mit einem Zylinderstift in Form eines Nockens, der einen Lagerring bzw. ein Rolllager vorsieht. Die DE 10 2011 080 504 A1 zeigt eine Spannvorrichtung, mit einem als Bolzen ausgebildeten Koppelabschnitt. Die DE 20 2004 009 051 U1 zeigt eine Spanneinrichtung mit einem Abdeckelement.

Der vorliegenden Erfindung liegt die Aufgabe zugrunde, ein Nullpunktspannmodul mit einem vorteilhaften Abdeckelement vorzusehen.

Diese Aufgabe wird gelöst durch ein Nullpunktspannmodul mit den Merkmalen des Patentanspruchs 1 und durch eine Verschlusseinrichtung mit den Merkmalen des Patentanspruchs 12.

Demnach ist insbesondere vorgesehen, dass die Spannaufnahme als Ausnehmung im Grundgehäuse ausgebildet ist, und dass in der Spannaufnahme eine Verschlusseinrichtung mit einem Abdeckelement, mit einem axial verschieblichen Stellelement und mit einem zwischen dem Abdeckelement und dem Stellelement vorgesehenen Dichtring derart vorgesehen sind, dass beim Bewegen des Verriegelungselements in eine radial innere Verschlusslage das Stellelement gegen das Abdeckelement bewegt wird, wodurch der Dichtring in radialer Richtung zur Abdichtung gegen das Grundgehäuse aufgeweitet wird. Das Verriegelungselement kann insbesondere als Spannschieber, oder auch als Verriegelungskugel ausgebildet sein. Insgesamt kann hierdurch bewirkt werden, dass die Ausnehmung bei nicht Vorhandensein eines Spannelements, insbesondere eines Spannbolzens, in der Spannaufnahme sicher verschlossen wird. Hierdurch kann unterbunden werden, dass Medien oder Späne in die Spannaufnahme gelangen, welche letztlich zu einer Verschlechterung des Wirkungsgrades des Nullpunktspannmoduls führen.

Das Stellelement kann insbesondere ringartig ausgebildet und kann auf einer Hülse axial verlagerbar angeordnet sein.

Hierdurch ergibt sich eine konstruktiv vorteilhafte Ausgestaltung, mit der bewirkt wird, dass der Dichtring sicher in radialer Richtung aufgeweitet wird.

Ferner ist vorteilhaft, wenn die Verschlusseinrichtung ein das Abdeckelement in die Spannaufnahme drängendes und dadurch die Spannaufnahme verschließendes Federelement umfasst, an dessen einem Ende die Hülse mit dem Abdeckelement sowie das auf der Hülse verschieblich gelagerte Stellelement angeordnet ist. Hierdurch kann ein sicheres Verschließen der Spannaufnahme gewährleistet werden.

Ferner ist vorteilhaft, wenn die mit der Schrägführung zusammenwirkende Oberfläche des Zylinderstifts um die Achse des Zylinderstifts drehbar gelagert angeordnet ist. Insbesondere dann, wenn auch zwei oder mehrere Spannelemente vorgesehen sind und entsprechend viele, am Kolben bzw. am Verriegelungselement erfindungsgemäß drehbar gelagert angeordnete Zylinderstifte, wird der Wirkungsgrad des Nullpunktspannmoduls aufgrund der Drehbarkeit und der daraus resultierenden verminderten Reibung zwischen Zylinderstift und Schrägführung erheblich erhöht. Der Zylinderstift kann einerseits am Kolben angeordnet sein, wobei dann die Schrägführung am Verriegelungselement, insbesondere am Spannschieber vorgesehen ist. Andererseits kann der Zylinderstift am Verriegelungselement vorgesehen sein, wobei dann die Schrägführung am Kolben angeordnet ist. Erfindungsgemäß weist der Zylinderstift einen Mittenabschnitt und zwei Endabschnitte auf, wobei der Mittenabschnitt eine mit der Schrägführung zusammenwirkende Oberfläche aufweist und die beiden Endabschnitte am Kolben bzw. am Verriegelungselement gelagert oder gehalten sind, so dass die Oberfläche des Zylinderstifts frei drehbar und in axialen Richtung des Zylinderstifts frei verschiebbar angeordnet ist. Hierdurch wird erreicht, dass der Zylinderstift auch quer zur Mittellängsachse beweglich angeordnet ist, wodurch auftretende Querkräfte besser aufgenommen werden können.

Gemäß der Erfindung kann vorgesehen sein, dass der Zylinderstift als solcher, also mit seiner Oberfläche, um seine Achse drehbar gelagert angeordnet ist. Eine derartige Lagerung kann auf einfache Art und Weise bereitgestellt werden. Der Zylinderstift kann dabei insbesondere einstückig ausgebildet sein.

Vorteilhafterweise sieht der wenigstens eine Zylinderstift ein Mittenabschnitt und zwei Endabschnitte vor, wobei die beiden Endabschnitte mittels je einer Gleitlagerbuchse am Kolben bzw. Verriegelungselement gelagert sind. Die Gleitlagerbuchsen sind folglich kolbenseitig bzw. verriegelungselementseitig angeordnet und vorzugsweise dort verankert. Die Gleitlagerbuchsen können beispielsweis mittels geeigneten Presspassungen am Kolben oder am Verriegelungselement festgesetzt sein. Die Gleitlagerbuchsen weisen insbesondere eine Gleitbeschichtung auf, die beispielsweise Polyoxymethylen (POM) umfassen kann. Andere, entsprechende Werkstoffe sind ebenfalls denkbar.

Die Gleitlagerbuchsen können dabei als Bundbuchsen ausgebildet sein, deren Bunde im montierten Zustand auf den einander abgewandten Seiten vorgesehen sind. Dadurch können die Gleitlagerbuchsen positionsgenau mit dem Kolben bzw. dem Verriegelungselement gefügt, insbesondere eingepresst, werden.

Bei einer weiteren Ausbildung der Erfindung ist vorgesehen, dass der Zylinderstift einen Stiftkern und eine auf dem Stiftkern drehbar angeordnete, die Oberfläche des Zylinderstifts bildende Stifthülse aufweist. Hierdurch kann erreicht werden, dass der Stiftkern sicher verankert werden kann, wobei dennoch eine geringe Reibung zwischen der Oberfläche des Zylinderstifts und der Schrägführung bereitgestellt werden kann.

Der Zylinderstift sieht dazu einen Mittenabschnitt und zwei Endabschnitte aufweisen, wobei die Stifthülse den Mittenabschnitt umgibt und wobei der Zylinderstift an den beiden Endabschnitten am Kolben bzw. am Verriegelungselement gehalten sind. Die Stifthülse ist dann sicher zwischen den Endabschnitten, insbesondere gefangen gelagert angeordnet.

In axialer Verlängerung des Zylinderstifts können gemäß einer weiteren Ausführungsform der Erfindung Sicherungselemente vorgesehen sein, die ein Ausfallen des Zylinderstifts aus den Kolben, bzw. den Gleitlagerbuchsen, verhindern. Die Sicherungselemente können dazu beispielsweise als quer zur Axialrichtung des Zylinderstifts verlaufende, im Kolben oder im Verriegelungselemente sitzende Sicherungsstifte oder Sicherungsschrauben ausgebildet sein. Die Sicherungselemente werden also nach dem Einführen des Zylinderstifts in insbesondere die Gleitlagerbuchsen am Kolben bzw. am Verriegelungselement befestigt.

Ferner ist denkbar, dass auf der dem Zylinderstift abgewandten Seite des Kolbens das Grundgehäuse mittels eines Deckels verschlossen ist. Der Deckel begrenzt folglich den Zylinderraum, in dem der Kolben axial verlagerbar angeordnet ist. Dabei ist denkbar, dass zwischen dem Deckel und dem Kolben Federelemente zur Druckbeaufschlagung des Kolbens vorgesehen sind. Die gegenüberliegende Seite des Kolbens ist vorzugsweise pneumatisch oder hydraulisch druckbeaufschlagbar.

Dabei hat sich als vorteilhaft herausgestellt, wenn der Deckel an seinem radialen Umfang Sicherungsabschnitte aufweist, die mittels einer Steck-Dreh-Bewegung in am Gehäuse vorgesehene Gegenabschnitte einführbar sind. Die Sicherungsabschnitte mit den Gegenabschnitten bilden dann einen Bajonettverschluss. Hierdurch kann der Deckel sicher im Grundgehäuse verankert werden, auch dann, wenn größere Drücke auf ihn wirken.

Weitere Einzelheiten und vorteilhafte Ausgestaltungen der Erfindung können der nachfolgenden Beschreibung entnommen werden, anhand derer ein Ausführungsbeispiel der Erfindung näher beschrieben und erläutert wird.

Es zeigen:
- Figur 1: ein erfindungsgemäßes Nullpunktspannmodul;
- Figur 2: einen Längsschnitt durch das Spannmodul gemäß Figur 1;
- Figur 3: den in Figur 2 im Längsschnitt gezeigten Kolben in Explosionsdarstellung;
- Figur 4: einen Längsschnitt durch den Kolben gemäß Figur 3;
- Figur 5: den Kolben gemäß Figur 3 mit damit zusammenwirkenden Verriegelungselementen;
- Figur 6: eine Verschlusseinrichtung zur Anordnung in der Spannaufnahme des Spannmoduls gemäß Figur 1 in perspektivischer Ansicht;
- Figur 7: die Verschlusseinrichtung gemäß Figur 6 in Seitenansicht;
- Figur 8: die Spannaufnahme gemäß Figur 1 mit verschlossener Spannaufnahme und
- Figur 9: den Deckel gemäß Figur 2 in Einzelteildarstellung.

Das in den Figuren gezeigte Nullpunktspannmodul 10 entspricht im Aufbau dem in der EP 1 707 307 B1 gezeigten Spannmodul. Das Spannmodul 10 umfasst ein Grundgehäuse 12 mit einer im Grundgehäuse 12 vorgesehenen Spannaufnahme 14 zur Aufnahme eines Spannelements in Form eines Spannbolzens, der in den Figuren nicht gezeigt ist.

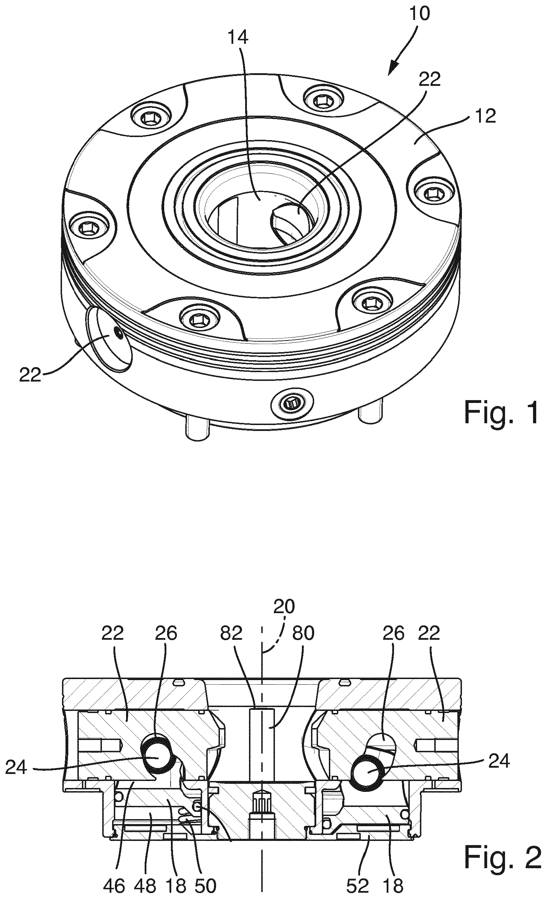

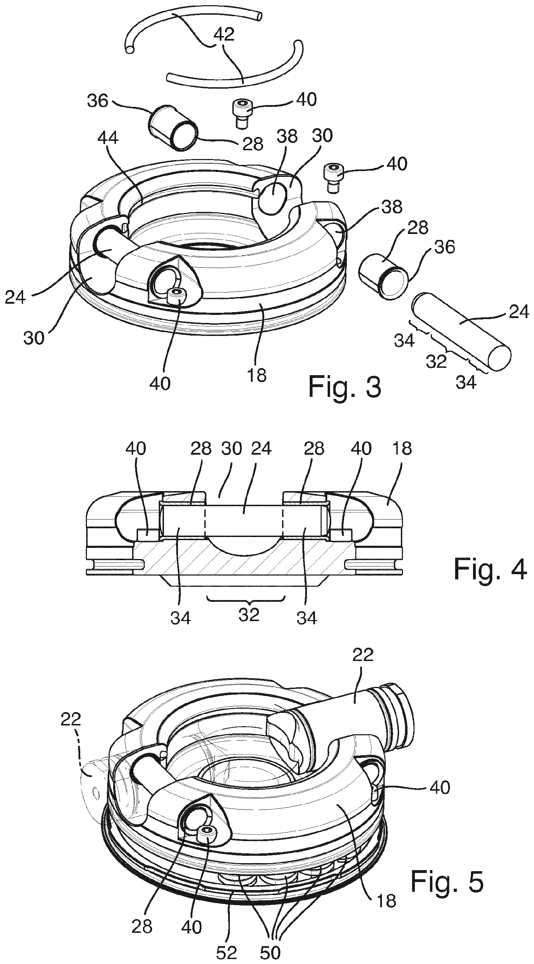

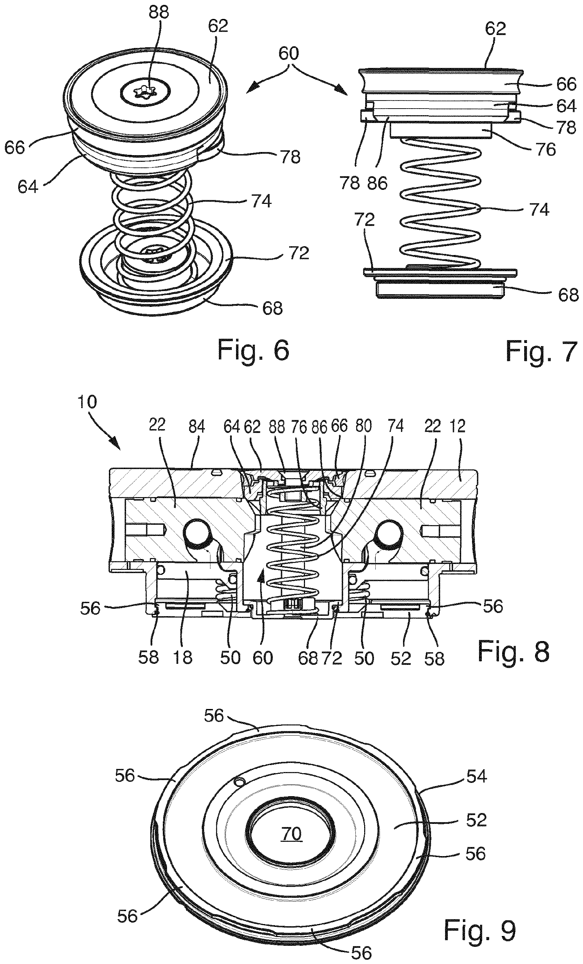

Wie aus dem Schnitt gemäß Figur 2 und 8 deutlich wird, ist im Grundgehäuse 12 ein axial verlagerbarer ringartig ausgebildeter Kolben 18 vorgesehen. Mit dem Kolben 18 bewegungsgekoppelt sind senkrecht zu einer Mittellängsachse 20 der Spannaufnahme 14 bewegbare Verriegelungselemente in Form von Spannschiebern 22 vorgesehen. Anstelle von den gezeigten Spannschiebern 22 können auch runde, kugelförmige oder ovale oder anders ausgebildete Verriegelungselemente Verwendung finden. Am Kolben sind zwei quer zur Mittellängsachse 20 verlaufende Zylinderstifte 24 angeordnet, die, wie aus Figur 3, 4 und 5 deutlich wird, parallel zueinander verlaufen. In der Figur 2 ist links ein Spannschieber 22 in der radial inneren Position zum Festsetzen eines Spannelements gezeigt; rechts ist der Spannschieber 22 in einer radial äußeren Position zum Freigeben des Spannelements dargestellt. Die Zylinderstifte 24 sind über an den Spannschiebern 22 vorgesehenen Schrägführungen 26 derart bewegungsgekoppelt, dass beim Verlagern des Kolbens in axialer Richtung, also in Richtung der Mittellängsachse 20, die Spannschieber 22 zum Festsetzen oder Freigeben eines in der Spannaufnahme 14 vorhandenen Spannbolzens in radialer Richtung bewegt werden.

Bei einer anderen Ausführungsform der Erfindung, die nicht den Figuren gezeigt ist, sind die Zylinderstift 24 nicht am Kolben 18, sondern an den Spannschiebern 23 vorgesehen. Die Schrägführungen 26 sind dann nicht an den Spannschiebern 23, sondern am Kolben 18 vorgesehen.

Die Zylinderstifte 24 sind insgesamt um ihre jeweilige Achse drehbar am Kolben 18 angeordnet. Dazu sind kolbenseitig für jeden Zylinderstift 24 zwei Gleitlagerbuchsen 28 angeordnet. Der Kolben 18 sieht dazu für jeden Zylinderstift 24 auf der den Spannschiebern 22 zugewandten Oberseite zwei sich nach axial unten erstreckende Ausnehmungen 30 auf. Die Ausnehmungen 30 sind derart, dass sich im endmontiertem Zustand ein Mittenabschnitt 32 des jeweiligen Zylinderstifts 24 sich in der Ausnehmung 30 befindet. Die Endabschnitte 34 der Zylinderstifte 24 werden im montierten Zustand von den Gleitlagerbuchsen 28 aufgenommen.

Die Gleitlagerbuchsen 28 weisen auf ihrer Innenseite eine Gleitbeschichtung auf, um die Reibung gegenüber den Zylinderstiften 24 zu reduzieren.

Wie ebenfalls aus Figur 3 deutlich wird, weisen die Gleitlagerbuchsen 28 an den einander abgewandten Seiten jeweils einen Bund 36 auf. Der Kolben 18 sieht zur Aufnahme der Gleitlagerbuchsen 28 Aufnahmebohrungen 38 vor. Zur Montage werden die Gleitlagerbuchsen 36 in die Aufnahmebohrungen 38 eingeführt, wobei die Bunde 36 der Gleitlagerbuchsen 28 im montierten Zustand auf den einander abgewandten Seiten vorgesehen sind. Die Gleitlagerbuchsen 28 können beispielsweise in die Aufnahmebohrungen 38 soweit eingepresst werden, bis die Bunde 36 am Kolben 18 zum Anliegen kommen. Danach können die Zylinderstifte in die Gleitlagerbuchsen 28 eingeschoben werden.

Die Zylinderstifte 24 sind dann in den Gleitlagerbuchsen 28 frei drehbar und deren axialer Richtung frei verschiebbar.

Gemäß einer anderen Ausführungsform der Erfindung, die nicht in den Figuren gezeigt ist, sind die Zylinderstift 24 in den Aufnahmebohrungen 38 festgesetzt, wobei dann im Bereich der Ausnehmung 30 eine Stifthülse auf dem jeweiligen Zylinderstift 24, bzw. dessen Kern, drehbar angeordnet ist.

Um ein Herausfallen der Zylinderstifte 24 aus den Gleitlagerbuchsen 28 zu verhindern, sind Sicherungselemente in Form von Sicherungsschrauben 40 vorgesehen. Die Sicherungsschrauben 40 befinden sich im montierten Zustand, wie ebenfalls aus Figur 3 und 4 deutlich wird, in axialer Verlängerung der Zylinderstifte 24 derart, dass der Schraubenkopf der Sicherungsschrauben 40 ein axiales Herausfallen der Zylinderstifte 24 verhindert.

Aus Figur 5 wird deutlich, wie die Spannschieber 22 mit den Zylinderstiften 24 zusammenwirken. Beim axialen Bewegen des Kolbens 18 rollen die Zylinderstifte 24 an der Innenoberfläche der Schrägführungen 26 ab. Die Schrägführungen 26 sind dabei derart ausgebildet, dass die Zylinderstifte 24 beim axialen Betätigen des Kolbens 18 beim Bewegen der Spannschieber 22 in die radial innere Position an der radial inneren Oberfläche der Schrägführungen 26 abrollen und beim Bewegen der Spannschieber 22 in die radial äußere Position an der radial äußeren Oberfläche der Schrägführungen 26.

In der Figur 3 sind ferner zwei Dichtelemente 42 gezeigt, die in einer Dichtnut 44 des Kolbens 18 angeordnet sind.

Wie aus dem Schnitt gemäß Figur 2 deutlich wird, begrenzt der Kolben 18 einen oberen Druckraum 46 und einen unteren Druckraum 48. Im unteren Druckraum 48 sind mehrere Federelemente 50 in Form von Schraubenfedern vorgesehen, die in Figur 5 und 8 ebenfalls zu erkennen sind. Die Federelemente 50 drängen den Kolben 18 nach axial oben, und damit die Spannschieber 22 in die Verriegelungslage.

Der Druckraum 46 ist im Gegensatz dazu pneumatisch oder hydraulisch druckbeaufschlagbar, um den Kolben 18 nach axial unten, und damit die Spannschieber 22 in die Freigabelage zu bewegen.

Auf der den Kolben 18 gegenüberliegenden Seite ist der Druckraum 48 mittels einem Deckel 52 verschlossen. In Figur 9 ist die dem Druckraum 48 zugewandte Innenseite des Deckels 52 deutlich zu erkennen. Im montierten Zustand sind die Federelemente 50 zwischen dem Deckel 52 und dem Kolben 18 angeordnet. Der Deckel 52 weist eine Mittelöffnung 70 sowie an seinem radialen äußeren Umfang 54, wie aus Figur 9 deutlich wird, Sicherungsabschnitte 56, die nach radial außen abstehend ausgebildet sind, auf. Die Sicherungsabschnitte 56 können zur Montage des Deckels 52 in am Grundgehäuse 12 dazu komplementär vorgesehene Gegenabschnitte 58 eingeführt werden, so dass der Deckel 52 mit einer Steck-Dreh-Bewegung bajonettartig in das Gehäuse 12 eingesetzt und dort gesichert werden kann.

In der Spannaufnahme 14 kann, wie in Figur 8 gezeigt, eine Verschlusseinrichtung 60 eingesetzt werden. Die Verschlusseinrichtung 60 ist in den Figuren 6 und 7 als Einzelteil dargestellt. Die Verschlusseinrichtung 60 weist ein Abdeckelement 62 auf, welches zur vollständigen Abdeckung der Spannaufnahme 14 vorgesehen ist. Ferner ist ein axial verschiebliches Stellelement 64 vorgesehen, sowie ein zwischen dem Abdeckelement 62 und dem Stellelement 64 vorgesehener Dichtring 66. Die Verschlusseinrichtung 60 weist zudem ein Bodenelement 68 auf, das in der Mittelöffnung 70 des Deckels 52 angeordnet ist.

Das Bodenelement 68 stützt sich dabei, wie in Figur 8 gezeigt, über einen Ringbund 72 am Rand der Mittelöffnung 70 ab. Zwischen dem Bodenelement 68 und dem Abdeckelement 62 ist eine Schraubenfeder 74 vorgesehen, die das Abdeckelement 62 weg vom Bodenelement 68 drängt.

Das Stellelement 64 ist, wie ebenfalls aus Figur 8 hervorgeht, ringartig ausgebildet und auf einer Hülse 76 axial verlagerbar. An der Hülse 76 sind zwei einander gegenüberliegende, in radialer Richtung abstehende Nasen 78 vorgesehen, die Figur 6 und 7 deutlich zu erkennen sind. Die Nasen 78 sind im montierten Zustand in sich parallel zur Mittellängsachse 20 verlaufenden Nuten 80, die in Figur 2 und 8 zu erkennen sind, geführt. Die Nuten 80 sehen einen Anschlag 82 vor, gegen welche die Nasen 78 von der Schraubenfeder 74 gedrängt werden. Dadurch wird sichergestellt, dass in der in Figur 8 gezeigten Position das Abdeckelement 62 wenigstens weitgehend bündig mit der Oberseite 84 des Gehäuses 12 abschließt.

Das Abdeckelement 62 ist mittels einer Befestigungsschraube 88 mit der Hülse 76 verbunden. Das Stellelement 64 ist auf der Hülse 76 axial verschiebbar, verliersicher gefangen angeordnet. Es weist an seiner unteren, dem Abdeckelement 62 abgewandten Seite eine Anfasung 86 auf. Die Anfasung 86 ist derart, dass beim nach axial innen Verfahren der Spannschieber 22, wie in Figur 8 gezeigt, das Stellelement 64 nach axial oben hin zum Abdeckelement 62 bewegt wird. Dadurch wird erreicht, dass der Dichtring 66, der abschnittsweise zwischen dem Abdeckelement 62 und dem Stellelement 64 angeordnet ist, sich in radialer Richtung aufweitet und dichtend an der Innenseite der Spannaufnahme 14 am Gehäuse 12 zum Anliegen kommt.

Insgesamt wird dadurch erreicht, dass ein sicheres Verschließen der Spannaufnahme 14 durch die Verschlusseinrichtung 60 insbesondere dann erreicht wird, wenn die Spannschieber 22 nach radial innen bewegt werden.

Die Verschlusseinrichtung 60 ist zudem derart, dass wenn ein Spannbolzen gegen das Abdeckelement 62 entlang der Mittellängsachse 20 in die Spannaufnahme 14 eingeführt wird, das Abdeckelement 22 entgegen der Federkraft der Feder 74 in die Spannaufnahme 14 soweit bewegt wird, bis der Spannbolzen mittels den Spannschiebern 22 sicher im Spannmodul 10 verriegelt wird.

Die Verschlusseinrichtung 60 gewährleistet folglich zum einen ein sicheres Verschließen der Spannaufnahme 14 mittels des Dichtrings 66. Zum anderen kann dennoch ein Spannbolzen sicher in die Spannaufnahme 14 eingeführt und dort verriegelt werden.

## Patentansprüche

1. Nullpunktspannmodul (10) mit einem Grundgehäuse (12), mit einer im Grundgehäuse (12) vorgesehenen Spannaufnahme (14) zur Aufnahme eines Spannelements, mit einem im Grundgehäuse (12) axial verlagerbar angeordneten Kolben (18), und mit wenigstens einem im Grundgehäuse (12) senkrecht zu einer Mittellängsachse (20) der Spannaufnahme (14) bewegbaren Verriegelungselement(22), wobei wenigstens ein am Kolben (18) bzw. am Verriegelungselement (22) quer zur Mittellängsachse angeordneter Zylinderstift (24) vorgesehen ist, der mit einer verriegelungselementseitigen bzw. kolbenseitigen Schrägführung (26) derart bewegungsgekoppelt ist, dass beim Verlagern des Kolbens (18) in axialer Richtung das Verriegelungselement (22) zum Festsetzen oder Freigeben eines von der Spannaufnahme (14) aufgenommenen Spannelements in radialer Richtung bewegt wird, wobei
die Spannaufnahme (14) als Ausnehmung im Grundgehäuse (12) ausgebildet ist, **dadurch gekennzeichnet, dass** in der Spannaufnahme (14) eine Verschlusseinrichtung (60) mit einem Abdeckelement (62), mit einem axial verschieblichen Stellelement (64) und mit einem zwischen dem Abdeckelement (62) und dem Stellelement (64) vorgesehenen Dichtring (66) derart vorgesehen ist, dass beim Bewegen des Verriegelungselements (22) in eine radial innere Verschlusslage das Stellelement (64) gegen das Abdeckelement (62) bewegt wird, wodurch der Dichtring (66) in radialer Richtung zur Abdichtung gegen das Grundgehäuse (12) aufgeweitet wird.

2. Nullpunktspannmodul (10) nach Anspruch 1, **dadurch gekennzeichnet, dass** das Stellelement (64) ringartig ausgebildet ist und auf einer Hülse (76) axial verlagerbar angeordnet ist.

3. Nullpunktspannmodul (10) nach Anspruch 1 oder 2, **dadurch gekennzeichnet, dass** die Verschlusseinrichtung (60) ein das Abdeckelement (62) in die Spannaufnahme (14) drängendes und dadurch die Spannaufnahme (14) verschließendes Federelement (74) umfasst, an dessen einen Ende die Hülse (76) mit dem Abdeckelement (62) sowie das auf der Hülse (76) verschieblich gelagerte Stellelement (64) angeordnet ist.

4. Nullpunktspannmodul (10) nach einem der vorhergehenden Ansprüche, dadurch dass der Zylinderstift (24) einen Mittenabschnitt (32) und zwei Endabschnitte (34) aufweist, wobei der Mittenabschnitt eine mit der Schrägführung (26) zusammenwirkende Oberfläche aufweist und die beiden Endabschnitte (34) am Kolben (18) bzw. am Verriegelungselement (22) gelagert oder gehalten sind, so dass die Oberfläche des Zylinderstifts (24) frei drehbar und in axialen Richtung des Zylinderstifts frei verschiebbar angeordnet ist.

5. Nullpunktspannmodul (10) nach Anspruch 4, **dadurch gekennzeichnet, dass** der Zylinderstift (24) als solcher um seine Achse drehbar gelagert angeordnet ist.

6. Nullpunktspannmodul (10) nach Anspruch 4 oder 5, **dadurch gekennzeichnet, dass** die beiden Endabschnitte (34) mittels je einer Gleitlagerbuchse (28) gelagert sind.

7. Nullpunktspannmodul (10) nach Anspruch 6, **dadurch gekennzeichnet, dass** die Gleitlagerbuchsen (28) als Bundbuchsen ausgebildet sind, deren Bunde (36) im montierten Zustand auf den einander abgewandten Seiten vorgesehen sind.

8. Nullpunktspannmodul (10) nach Anspruch 4, **dadurch gekennzeichnet, dass** der Zylinderstift (24) einen Stiftkern und eine auf dem Stiftkern drehbar angeordnete, die Oberfläche des Zylinderstifts (24) bildende Stifthülse aufweist, wobei die Stifthülse den Mittenabschnitt (32) umgibt.

9. Nullpunktspannmodul (10) nach einem der Ansprüche 4 bis 8, **dadurch gekennzeichnet, dass** in axialer Verlängerung des Zylinderstifts (24) Sicherungselemente (40) vorgesehen sind, die einen Ausfall des Zylinderstifts (24) verhindern.

10. Nullpunktspannmodul (10) nach einem der Ansprüche 4 bis 9, **dadurch gekennzeichnet, dass** auf der dem Zylinderstift (24) abgewandten Seite des Kolbens (18) das Grundgehäuse (12) mittels eines Deckels (52) verschlossen ist, wobei zwischen dem Deckel (52) und dem Kolben (18) Federelemente (50) zur Druckbeaufschlagung des Kolbens (18) vorgesehen sind.

11. Nullpunktspannmodul (10) nach Anspruch 10, **dadurch gekennzeichnet, dass** der Deckel (52) an seinem radialen Umfang Sicherungsabschnitte (56) aufweist, die mittels einer Steck-Dreh-Bewegung in am Grundgehäuse (12) vorgesehenen Gegenabschnitte (58) einführbar sind.

12. Verschlusseinrichtung (60) zur Anordnung in der Spannaufnahme eines Nullpunktspannmodul (10) nach einem der vorhergehenden Ansprüche, mit einem Abdeckelement (62), mit einem axial verschieblichen Stellelement (64) und mit einem zwischen dem Abdeckelement (62) und dem Stellelement (64) vorgesehenen Dichtring (66) derart vorgesehen ist, dass bei in die Spannaufnahme eingesetzter Verschlusseinrichtung (60) beim Bewegen des Verriegelungselements (22) des Nullpunktspannmodul (10) in eine radial innere Verschlusslage das Stellelement (64) gegen das Abdeckelement (62) bewegt wird, wodurch der Dichtring (66) in radialer Richtung zur Abdichtung gegen das Grundgehäuse (12) des Nullpunktspannmodul (10) aufgeweitet wird.

13. Verschlusseinrichtung (60) nach Anspruch 12, **dadurch gekennzeichnet, dass** das Stellelement (64) ringartig ausgebildet ist und auf einer Hülse (76) axial verlagerbar angeordnet ist.

14. Verschlusseinrichtung (60) nach Anspruch 12 oder 13, **dadurch gekennzeichnet, dass** die Verschlusseinrichtung (60) ein das Abdeckelement (62) in die Spannaufnahme (14) drängendes und dadurch die Spannaufnahme (14) verschließendes Federelement (74) umfasst, an dessen einen Ende die Hülse (76) mit dem Abdeckelement (62) sowie das auf der Hülse (76) verschieblich gelagerte Stellelement (64) angeordnet ist.

## Claims

1. Zero-point clamping module (10) with a basic housing (12), with a clamping seat (14) provided in the basic housing (12) for receiving a clamping element, with a piston (18) arranged in the basic housing (12) in an axially displaceable manner, and with at least one locking element (22) movable in the basic housing (12) orthogonally to a longitudinal center axis (20) of the clamping seat (14), wherein at least one cylinder pin (24) is provided, which is arranged on the piston (18) or the locking element (22), respectively, transversely with respect to the longitudinal center axis, the pin being movably coupled with an inclined guide (26) on the side of the locking element or the piston, respectively, in such a way that, when the piston (18) is moved in axial direction, the locking element (22) for fixing or releasing a clamping element received by the clamping seat (14) is moved in radial direction, wherein the clamping seat (14) is formed as a recess in the basic housing (12),
**characterized in that** a closure device (60) with a cover element (62), with an axially movable setting element (64) and with a sealing ring (66) provided between the cover element (62) and the setting element (64) is provided in such a way in the clamping seat that, when the locking element (22) is moved in a radially inner closing position, the setting element (64) is moved against the cover element (62), so that the sealing ring (66) is expanded in radial direction for sealing against the basic housing (12).

2. Zero-point clamping module (10) as claimed in claim 1, **characterized in that** the setting element (64) is formed like a ring and is arranged axially displaceable on a bushing (76).

3. Zero-point clamping module (10) as claimed in claim 1 or 2, **characterized in that** the closure device (60) comprises a spring element (74) pushing the cover element (62) into the clamping seat (14) and thus closing the clamping seat (14), wherein at the one end of said spring element the bushing (76) with the cover element (62) as well as the setting element (64) movably supported on the bushing (76) are arranged.

4. Zero-point clamping module (10) as claimed in one of the preceding claims, **characterized in that** the cylinder pin (24) comprises a middle part (32) and two end parts (34), wherein the middle part comprises a surface cooperating with the inclined guide (26) and the two end parts (34) are supported or held at the piston (18) or the locking element (22), respectively, so that the surface of the cylinder pin (24) is arranged freely rotatable and freely displaceable in axial direction of the cylinder pin.

5. Zero-point clamping module (10) as claimed in claim 4, **characterized in that** the cylinder pin (24) as such is arranged rotatably around its axis.

6. Zero-point clamping module (10) as claimed in claim 4 or 5, **characterized in that** the two end parts (34) each are supported by means of a plain bearing bushing (28).

7. Zero-point clamping module (10) as claimed in claim 6, **characterized in that** that the plain bearing bushings (28) are formed as collar bushings, the collars of which are provided on opposite sides when mounted.

8. Zero-point clamping module (10) as claimed in claim 4, **characterized in that** the cylinder pin (24) has a pin core and a pin sleeve arranged rotatably on the pin core and forming the surface of the cylinder pin (24), wherein the pin sleeve encloses the middle part (32).

9. Zero-point clamping module (10) as claimed in one of claims 4 to 8, **characterized in that** securing elements (40) are provided in axial extension of the cylinder pin (24) to prevent the cylinder pin (24) from falling out.

10. Zero-point clamping module (10) as claimed in one of claims 4 to 9, **characterized in that** that the basic housing (12) is closed by means of a lid (52) on the side of the piston (18) opposite to the cylinder pin (24), wherein between the lid (52) and the piston (18) spring elements (50) for pushing the piston (18) are provided.

11. Zero-point clamping module (10) as claimed in claim 10, **characterized in that** the lid (52) has securing portions (56) on its radial circumference which can be inserted by means of an inserting and rotating movement into counterparts (58) provided in the basic housing (12).

12. Closure device (60) for arrangement in the clamping seat of a zero-point clamping module (10) as claimed in one of the preceding claims, with a cover element (62), with an axially movable setting element (64) and with a sealing ring (66) provided between the cover element (62) and the setting element (64) and provided in such a way that, when the closure device (60) is inserted in the clamping seat and when the locking element (22) of the zero-point clamping module (10) is moved in a radially inner closing position, the setting element (64) is moved against the cover element (62), so that the sealing ring (66) is expanded in radial direction for sealing against the basic housing (12) on the zero-point clamping module (10).

13. Closure device (60) as claimed in claim 12, **characterized in that** the setting element (64) is formed like a ring and is arranged axially displaceable on a bushing (76).

14. Closure device (60) as claimed in claim 12 or 13, **characterized in that** the closure device (60) comprises a spring element (74) pushing the cover element (62) into the clamping seat (14) and thus closing the clamping seat (14), wherein at the one end of said spring element the bushing (76) with the cover element (62) as well as the setting element (64) movably supported on the bushing (76) are arranged.

## Revendications

1. Module de serrage à point zéro (10) avec un boîtier de base (12), avec un logement de serrage (14) prévu dans le boîtier de base (12) pour la réception d'un élément de serrage, avec un piston (18) disposé de manière déplaçable axialement dans le boîtier de base (12), et avec au moins un élément de verrouillage (22) mobile dans le boîtier de base (12) perpendiculairement à un axe longitudinal médian (20) du logement de serrage (14), dans lequel au moins une goupille cylindrique (24) disposée sur le piston (18) ou sur l'élément de verrouillage (22) transversalement par rapport à l'axe longitudinal médian est prévue, qui est accouplée en mouvement à un guidage oblique (26) côté élément de verrouillage ou côté piston de telle sorte que lors du déplacement du piston (18) dans la direction axiale l'élément de verrouillage (22) est mû dans la direction radiale pour la fixation ou la libération d'un élément de serrage reçu par le logement de serrage (14), dans lequel le logement de serrage (14) est réalisé sous la forme d'un évidement dans le boîtier de base (12), **caractérisé en ce qu'**un dispositif de fermeture (60) avec un élément de recouvrement (62), avec un élément de réglage (64) coulissant axialement et avec une bague d'étanchéité (66) prévue entre l'élément de recouvrement (62) et l'élément de réglage (64) est prévu dans le logement de serrage (14), de telle sorte que lors du mouvement de l'élément de verrouillage (22) dans une position de fermeture radialement intérieure l'élément de réglage (64) est mû contre l'élément de recouvrement (62), ce qui a pour effet que la bague d'étanchéité (66) est élargie dans la direction radiale pour l'étanchéification par rapport au boîtier de base (12).

2. Module de serrage à point zéro (10) selon la revendication 1, **caractérisé en ce que** l'élément de réglage (64) est réalisé de manière annulaire et est disposé de manière déplaçable axialement sur un manchon (76).

3. Module de serrage à point zéro (10) selon la revendication 1 ou 2, **caractérisé en ce que** le dispositif de fermeture (60) comprend un élément ressort (74) poussant l'élément de recouvrement (62) dans le logement de serrage (14) et fermant ainsi le logement de serrage (14), à l'une des extrémités duquel est disposé le manchon (76) avec l'élément de recouvrement (62) ainsi que l'élément de réglage (64) monté coulissant sur le manchon (76).

4. Module de serrage à point zéro (10) selon l'une quelconque des revendications précédentes, **caractérisé en ce que** la goupille cylindrique (24) présente une partie centrale (32) et deux parties d'extrémité (34), dans lequel la partie centrale présente une surface coopérant avec le guidage oblique (26) et les deux parties d'extrémité (34) sont montées ou retenues sur le piston (18) ou sur l'élément de verrouillage (22), de sorte que la surface de la goupille cylindrique (24) est librement rotative et disposée de manière à pouvoir coulisser librement dans la direction axiale de la goupille cylindrique.

5. Module de serrage à point zéro (10) selon la revendication 4, **caractérisé en ce que** la goupille cylindrique (24) est disposée en tant que telle de manière à pouvoir tourner autour de son axe.

6. Module de serrage à point zéro (10) selon la revendication 4 ou 5, **caractérisé en ce que** les deux parties d'extrémité (34) sont montées au moyen de respectivement un coussinet lisse (28).

7. Module de serrage à point zéro (10) selon la revendication 6, **caractérisé en ce que** les coussinets lisses (28) sont réalisés sous la forme de coussinets à collets, dont les collets (36) sont prévus dans l'état monté sur les faces opposées les unes aux autres.

8. Module de serrage à point zéro (10) selon la revendication 4, **caractérisé en ce que** la goupille cylindrique (24) présente un noyau de goupille et un manchon de goupille disposé en rotation sur le noyau de goupille, formant la surface de la goupille cylindrique (24),
dans lequel le manchon de goupille entoure la partie centrale (32).

9. Module de serrage à point zéro (10) selon l'une quelconque des revendications 4 à 8, **caractérisé en ce que** des éléments de blocage (40), qui empêchent une chute de la goupille cylindrique (24), sont prévus dans le prolongement axial de la goupille cylindrique (24).

10. Module de serrage à point zéro (10) selon l'une quelconque des revendications 4 à 9, **caractérisé en ce que** sur la face du piston (18) opposée à la goupille cylindrique (24) le boîtier de base (12) est fermé au moyen d'un couvercle (52), dans lequel des éléments ressort (50) pour la sollicitation en pression du piston (18) sont prévus entre le couvercle (52) et le piston (18).

11. Module de serrage à point zéro (10) selon la revendication 10, **caractérisé en ce que** le couvercle (52) présente sur sa périphérie radiale des parties de blocage (56), qui peuvent être introduites dans des parties complémentaires (58) prévues sur le boîtier de base (12) au moyen d'un mouvement d'enfichage et de rotation.

12. Dispositif de fermeture (60) à disposer dans le logement de serrage d'un module de serrage à point zéro (10) selon l'une quelconque des revendications précédentes, avec un élément de recouvrement (62), avec un élément de réglage (64) axialement coulissant et avec une bague d'étanchéité (66) prévue entre l'élément de recouvrement (62) et l'élément de réglage (64) est prévu de telle sorte que lorsque le dispositif de fermeture (60) est inséré dans le logement de serrage lors du mouvement de l'élément de verrouillage (22) du module de serrage à point zéro (10) dans une position de fermeture radialement intérieure l'élément de réglage (64) est mû contre l'élément de recouvrement (62), ce qui a pour effet que la bague d'étanchéité (66) est élargie dans la direction radiale pour l'étanchéification par rapport au boîtier de base (12) du module de serrage à point zéro (10).

13. Dispositif de fermeture (60) selon la revendication 12, **caractérisé en ce que** l'élément de réglage (64) est réalisé de manière annulaire et est disposé de manière déplaçable axialement sur un manchon (76).

14. Dispositif de fermeture (60) selon la revendication 12 ou 13, **caractérisé en ce que** le dispositif de fermeture (60) comprend un élément ressort (74) poussant l'élément de recouvrement (62) dans le logement de serrage (14) et fermant ainsi le logement de serrage (14), à l'une des extrémités duquel est disposé le manchon (76) avec l'élément de recouvrement (62) ainsi que l'élément de réglage (64) monté coulissant sur le manchon (76).
